# EUROPÄISCHE PATENTSCHRIFT

(11) **EP 2 762 275 B1**
(45) Veröffentlichungstag und Bekanntmachung des Hinweises auf die Patenterteilung: **12.02.2020**
(21) Anmeldenummer: 14150525.5
(22) Anmeldetag: 09.01.2014
(51) Int. Cl.: B25C 5/00, B25C 5/11, F24D 3/14

(54) **Klammergerät**
Stapling device
Agrafeuse

(30) Priorität: 04.02.2013 DE 202013100485 U
(43) Veröffentlichungstag der Anmeldung: 06.08.2014
(73) Patentinhaber: Schmitz, Michael, 57462 Olpe (DE)
(72) Erfinder: Schmitz, Michael, 57462 Olpe (DE)
(74) Vertreter: Beckmann, Jürgen

(56) Entgegenhaltungen:
- DE-U1-202004 011 405
- DE-U1-202006 005 634
- GB-A- 2 441 017
- US-A1- 2005 039 933

## Beschreibung

Die Erfindung betrifft ein Klammergerät, das beispielsweise zum Setzen von Klammern oder Clipsen für Fußbodenheizungen verwendet werden kann.

Aus der DE 20 2006 005 634 U1 ist ein Tacker zum Festlegen von Heizrohren auf Dämmuntergründen bekannt, bei welchem U-förmige Clipse durch Druck einer federbelasteten Setzstange aus einem Klammerschacht in den Dämmuntergrund gedrückt werden. Problematisch bei diesen und ähnlichen Klammergeräten ist, dass sich Klammern im Klammerschacht verhaken können, was eine weitere Benutzung des Gerätes verhindert und eine aufwändige Beseitigung des Fehlers erfordert.

Die GB 2 441 017 beschreibt ein Klammergerät, bei welchem eine Körperplatte und ein Deckel miteinander verschraubt sind und zwischen sich einen Hohlraum zur Aufnahme von Klammern sowie eines in Setzrichtung beweglichen Stempels aufweisen.

Vor diesem Hintergrund war es Aufgabe der vorliegenden Erfindung, ein Klammergerät mit verbesserten Handhabungseigenschaften bereitzustellen, welches sich insbesondere leicht warten lässt.

Diese Aufgabe wird durch ein Klammergerät nach Anspruch 1 gelöst. Vorteilhafte Ausgestaltungen sind in den Unteransprüchen enthalten.

Das erfindungsgemäße Klammergerät dient zum Setzen von Klammern, beispielsweise von U-förmigen Clipsen in einen Dämmuntergrund zur Festlegung von Heizungsrohren oder dergleichen. Grundsätzlich ist das Klammergerät jedoch nicht auf derartige Anwendungen beschränkt, sondern kann auch in anderen Bereichen vorteilhaft eingesetzt werden. Das Klammergerät enthält die folgenden Bestandteile:
- Eine erste Komponente, welche nachfolgend als " Schachtkörper" bezeichnet wird.
- Eine zweite Komponente, welche nachfolgend als "Schachtdeckel" bezeichnet wird und welche gegenüber dem vorgenannten Schachtkörper beweglich gelagert ist, beispielsweise drehbeweglich und/oder verschiebebeweglich. Des Weiteren soll der Schachtkörper zusammen mit dem Schachtdeckel einen Klammerschacht ausbilden, wenn sich beide in einer als "Arbeitsposition" bezeichneten Relativposition befinden. Der Klammerschacht dient dazu, zu setzende Klammern aufzunehmen (zum Beispiel aus einem Magazin) und während des Setzvorganges zu führen. Wenn sich Schachtkörper und Schachtdeckel nicht in der "Arbeitsposition" befinden, sollen sie einen Zugang zum Klammerschacht frei geben.
- Einen Stempel, welcher gegenüber dem Schachtdeckel und dem Schachtkörper verschiebebeweglich in einer Verschieberichtung gelagert ist und welcher einen Anschlagkörper aufweist. Die Verschieberichtung wird nachfolgend als "Setzrichtung" bezeichnet, da sie typischerweise der Bewegungsrichtung beim Setzen von Klammern mit dem Klammergerät entspricht.
- Eine Feder, welche an einem Ende am Stempel abgestützt ist und eine Kraft auf den Schachtdeckel ausübt, welche den Schachtdeckel gegen den Schachtkörper presst und weiterhin den Schachtkörper gegen den Anschlagkörper des Stempels presst. Der Begriff "Feder" bezeichnet dabei ein grundsätzlich beliebig gestaltetes elastisches Element oder Bauteil, welches die gewünschte Druck- oder Zugkraft und/oder ein Drehmoment zwischen zwei Punkten erzeugen kann. Insbesondere kann es sich bei der Feder um eine Spiralfeder handeln, welche über einen vorgegebenen Längenbereich komprimierbar bzw. expandierbar ist und dabei zwischen ihren Angriffspunkten eine Kraft erzeugt.

Gemäß einer bevorzugten Ausführungsform der Erfindung ist der Schachtdeckel in Setzrichtung verschiebebeweglich gegenüber dem Schachtkörper gelagert. Er kann also in derselben Richtung verschoben werden, in der auch der Stempel beweglich ist.

Des Weiteren übt die Feder vorzugsweise ihre Druckkraft in Setzrichtung auf den Schachtdeckel aus. Dies ist insbesondere in Verbindung mit der vorgenannten Ausführungsform vorteilhaft, da dann die Richtung der Kraftausübung mit der Bewegungsrichtung des Schachtdeckels übereinstimmt.

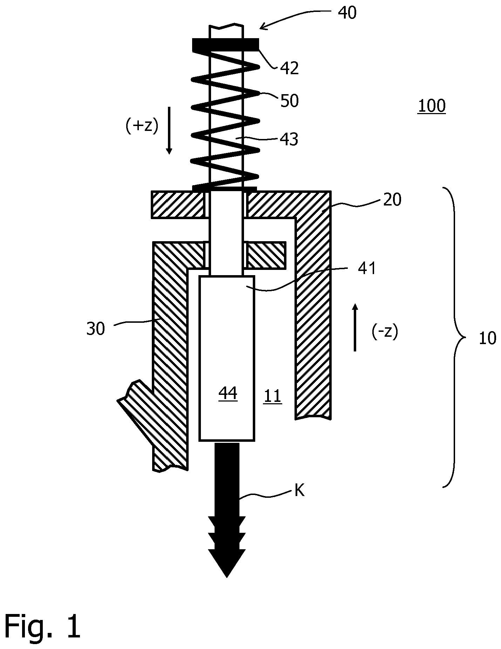

Bei dem beschriebenen Klammergerät sind der Schachtdeckel, der Schachtkörper, und der Stempel alle relativ zueinander beweglich gelagert, beispielsweise verschiebebeweglich in der Setzrichtung. Des Weiteren ist die Feder so vorgesehen, dass sie den Schachtdeckel in Richtung eines Anschlagkörpers des Stempels presst (oder zieht), wobei zwischen dem Schachtdeckel und diesem Anschlagkörper der Schachtkörper sandwichartig eingeklemmt wird. Kräftemäßig umklammert der Stempel in dieser Anordnung den Schachtdeckel und den Schachtkörper (vgl. Fig. 1).

Der zweiteilige Aufbau des Klammerschachtes aus zwei zueinander beweglichen Komponenten (Schachtdeckel, Schachtkörper) hat den Vorteil, dass durch eine relative Verlagerung dieser Komponenten der Klammerschacht für eine Wartung und beispielsweise die Beseitigung von festsitzenden Klammern leicht zugänglich gemacht werden kann.

Der Schachtdeckel und der Schachtkörper sind typischerweise so angeordnet, dass sie sich in ihrer Arbeitsposition befinden, wenn die Feder den Schachtdeckel in Anschlag gegen der Schachtkörper presst. In diesem Falle bilden die beiden Komponenten gemeinsam den funktionsfähigen Klammerschacht aus. Die Feder befindet sich in dabei in ihrem Ausgangs- oder Ruhezustand, in welchem das Klammergerät ohne äußere Einwirkungen ist und alle Teile unter der Wirkung der Federkraft ihre jeweilige Ruheposition einnehmen.

Der Schachtdeckel kann insbesondere als ein im Wesentlichen flaches, plattenförmiges Element ausgebildet sein, welches den ansonsten im Schachtkörper ausgebildeten Klammerschacht an einer Seite abdeckt.

Der Stempel weist vorzugsweise eine Betätigungsstange auf, welche von außen in den Klammerschacht hineinführt. Der äußere Teil dieser Betätigungsstange ist daher zugänglich und kann insbesondere mit einem Griff versehen werden für die manuelle Betätigung durch einen Benutzer. Die Feder kann in diesem Falle insbesondere als eine Spiralfeder ausgebildet sein, welche sich um einen Abschnitt der Betätigungsstange windet und sich mit einem Ende axial an der Betätigungsstange abstützt.

Des Weiteren kann der Stempel einen im Klammerschacht gelagerten Klammerstößel aufweisen, mit welchem im Klammerschacht befindliche Klammern in den Untergrund gedrückt werden können. Typischerweise befindet sich ein solcher Klammerstößel am Ende einer Betätigungsstange der vorgenannten Art, so dass ein Benutzer über die Betätigungsstange und den Klammerstößeln Klammern setzen kann.

Wie erläutert gibt es einen Ruhezustand des Klammergerätes, in welchem ohne Beteiligung von äußeren Kräften allein aufgrund der Federkraft der Schachtdeckel gegen den Schachtkörper und dieser wiederum gegen den Anschlagkörper des Stempels gedrückt wird. Aus diesem Ruhezustand heraus ist der Stempel gegen die Kraft der Feder relativ zum Schachtdeckel in Setzrichtung verschiebebeweglich. Vorzugsweise endet diese Verschiebebeweglichkeit dabei in einer vorgegebenen Endposition, in welcher der Stempel (mittelbar oder unmittelbar) an den Schachtdeckel und/oder an den Schachtkörper anschlägt. Auf diese Weise kann eine übermäßige Beanspruchung der Feder (z. B. durch Erreichen einer Blocklage) vermieden werden.

Bei der vorgenannten Verschiebung des Stempels relativ zum Schachtdeckel kann der Schachtkörper gegenüber dem Schachtdeckel in Ruhe bleiben. Der Klammerschacht bleibt dann erhalten und der Verschiebevorgang entspricht dem Setzen einer Klammer durch Eindringen des Stempels in den Klammerschacht.

Alternativ kann bei der Verschiebung des Stempels relativ zum Schachtdeckel jedoch auch der Schachtkörper gegenüber dem Stempel in Ruhe bleiben. Die verbleibende Relativbewegung zwischen Stempel und Schachtdeckel führt dann zu einem Öffnen des Klammerschachtes, was für Wartungszwecke genutzt werden kann.

Ein und derselbe Federmechanismus kann daher vorteilhafterweise genutzt werden, um einerseits das Setzen von Klammern durch Drücken des Stempels zu kontrollieren und andererseits das Öffnen des Klammerschachtes zu ermöglichen.

Der Schachtkörper und/oder der Schachtdeckel ist vorzugsweise zur Abstützung auf dem Untergrund (Fußboden) eingerichtet. Er kann zu diesem Zweck beispielsweise mit einem Fuß versehen sein. Die Anordnung der Bauteile des Klammergerätes ist dann typischerweise so, dass die Setzrichtung in etwa senkrecht zum Untergrund verläuft, so dass auf den Stempel bzw. die Feder in (positiver) Setzrichtung ausgeübter Druck letztlich im Untergrund sein Gegenlager findet.

Der Schachtkörper ist vorzugsweise mit einem Magazin für die Zufuhr von Klammern versehen. Optional kann ein solches Magazin auch am Schachtdeckel vorgesehen sein. Die Anbringung am Schachtkörper ist von Vorteil, wenn dieser wie vorstehend erläutert fest auf dem Untergrund abgestützt ist.

Der Schachtdeckel und der Schachtkörper können auf unterschiedliche Weisen miteinander gekoppelt sein, beispielsweise mittelbar über den Stempel. Insbesondere kann eine Lagerung der beiden Komponenten aneinander über Kulissen (z. B. Schlitze) erfolgen, durch welche Führungsstifte ragen.

Im Folgenden wird die Erfindung mit Hilfe der beigefügten Figuren anhand eines Ausführungsbeispiels erläutert. Die Figuren zeigen im Einzelnen:
- Fig. 1: das Funktionsprinzip eines Klammergerätes gemäß der vorliegenden Erfindung in einem schematischen Querschnitt durch den Setzkopf;
- Fig. 2: zwei perspektivische Ansichten eines kompletten Klammergerätes;
- Fig. 3: eine Rückansicht (links), eine Seitenansicht (Mitte), und eine Frontansicht (rechts) des Klammergerätes von Figur 2;
- Fig. 4: zwei perspektivische Ansichten des Klammergerätes von Figur 2 bei geöffnetem Klammerschacht;
- Fig. 5: eine Rückansicht (links), eine Seitenansicht (Mitte), und eine Frontansicht (rechts) des Klammergerätes von Figur 4;
- Fig. 6: eine Aufsicht mit entferntem Schachtdeckel auf den Setzkopf des Klammergerätes von Figur 1 im Ruhezustand (links) sowie die zugehörige Schnittansicht durch die Mittellinie A-A (rechts);
- Fig. 7: Ansichten wie in Figur 6 mit in der Aufsicht teilweise entferntem Schachtdeckel bei Eintritt einer Klammer in den Klammerschacht;
- Fig. 8: Ansichten gemäß Figur 7 nach Kontakt des Stößels mit der Klammer;
- Fig. 9: Ansichten gemäß Figur 7 bzw. 8 nach Ausstoß der Klammer aus dem Klammergerät;
- Fig. 10: Detailansichten der Klammerrückhaltung;
- Fig. 11: zwei separate perspektivische Ansichten des Stempels mit der Feder;
- Fig. 12: eine separate perspektivische Ansicht des Schachtkörpers.

Eine erfindungsgemäßes Klammergerät zum Setzen von Klammern K, mit denen beispielsweise die Rohre von Fußbodenheizungen auf einem Isolationsuntergrund befestigt werden können, wird zunächst allgemein und schematisch anhand der Schnittansicht von Figur 1 erläutert.

Figur 1 zeigt nur die für die vorliegende Erfindung maßgebenden Komponenten des Klammergerätes 100, nämlich:
a) Eine erste Schachtkomponente 20, welche im Folgenden als "Schachtdeckel" bezeichnet wird.
b) Eine zweite Schachtkomponente 30, welche im Folgenden als "Schachtkörper" bezeichnet wird.
   Schachtdeckel 20 und Schachtkörper 30 bilden gemeinsam den Setzkopf 10 mit dem Klammerschacht 11, in welchem eine Klammer K vor dem Setzen gehalten und während des Setzens geführt wird. Weiterhin sind Schachtdeckel und Schachtkörper relativ zueinander (in Grenzen) verschiebebeweglich in einer Setzrichtung z (d. h. in positiver Richtung (+z) nach unten als auch in negativer Richtung (-z) nach oben).
c) Einen Stempel 40, welcher im Wesentlichen aus einem im Klammerschacht 11 befindlichen Stößel 44 und einer daran angrenzenden Stange 43 besteht. Weiterhin hat der in Setzrichtung (±z) verschiebebewegliche Stempel 40 einen Anschlagkörper 41, mit dem er bei einer Bewegung in negative Setzrichtung (-z) am Schachtkörper 30 anschlägt, sowie eine Federbefestigung 42. Der Anschlagkörper 41 wird wie dargestellt im Allgemeinen durch einen Teil des Stößels 44 bzw. den Stößel selbst gebildet.
d) Eine Feder 50, welche mit einem Ende an der vorgenannten Federbefestigung 42 des Stempels 40 fixiert ist und mit ihrem anderen Ende am Schachtdeckel 20 angreift.

In dieser Anordnung sind Schachtdeckel 20, Schachtkörper 30, und Stempel 40 alle relativ zueinander verschiebebeweglich in der Setzrichtung (±z). In der Figur dargestellt ist dabei ein (instabiler) Zwischenzustand, in dem die Feder 50 gegenüber ihrer Ruheposition verkürzt ist.

Während des normalen Gebrauchs des Klammergerätes 100 stoßen Schachtdeckel 20 und Schachtkörper 30 in ihrer "Arbeitsposition" aneinander an und ruhen relativ zueinander, so dass sie einen einstückig wirkenden Setzkopf 10 ausbilden. Der Stempel 40 ist gegenüber diesem Setzkopf 10 verschiebebeweglich in Setzrichtung (±z) gelagert, wobei er durch die Feder 50 in eine zurückgezogene Ruheposition gedrängt wird, in welcher er mit dem Anschlagkörper 41 am Schachtkörper 30 anliegt. Eine im Klammerschacht 11 befindliche Klammer K kann dann durch Drücken des Stempels 40 in positive Setzrichtung (+z) durch den Stößel 44 aus dem Setzkopf 10 herausgedrückt werden.

Gelegentlich kann es vorkommen, dass sich beim Setzvorgang Klammern K im Klammerschacht 11 verhaken und von Hand aus diesem entfernt werden müssen, bevor das Klammergerät 100 weiterverwendet werden kann. Um diesbezüglich eine gute Zugänglichkeit zum Klammerschacht 11 zu ermöglichen, sind der Schachtdeckel 20 und der Schachtkörper 30 verschiebebeweglich in Setzrichtung (±z) zueinander gelagert. Daher kann insbesondere der Schachtdeckel 20 in negativer Setzrichtung (-z) gegen den Druck der Feder 50 vom Schachtkörper 30 weg geschoben werden, um den Klammerschacht 11 zu öffnen. In Figur 1 ist der Beginn dieser Öffnungsbewegung dargestellt. Nach Entfernen der Störung bewegt sich der Schachtdeckel 20 unter der Wirkung der Feder 50 wieder in seine Arbeitsposition, in der er mit dem Schachtkörper 30 zusammen den Setzkopf 10 und den Klammerschacht 11 bildet. Das Klammern kann dann fortgeführt werden.

Die beschriebene Konstruktion hat den Vorteil, dass sie eine optimale Zugänglichkeit zum Klammerschacht 11 ermöglicht, welcher quasi komplett von der Vorderseite her geöffnet werden kann. Vorteilhafterweise wird dabei die Wirkung derselben Feder 50 ausgenutzt, welche auch dazu dient, den Stempel 40 in seine Ausgangslage vorzuspannen.

Das vorgenannte erfindungsgemäße Prinzip einer Doppelfunktion der Feder (Stempelbewegung und Öffnen des Klammerschachtes) kann auch bei verschiedenen Abwandlungen der dargestellten Konstruktion erreicht werden. Beispielsweise könnte der Schachtdeckel 20 drehbeweglich (schwenkbar) gegenüber dem Schachtkörper 30 gelagert sein, wobei eine den Klammerschacht öffnende Bewegung gegen die Kraft der Feder erfolgen würde (z. B. gegen eine Torsion oder Kompression der Feder).

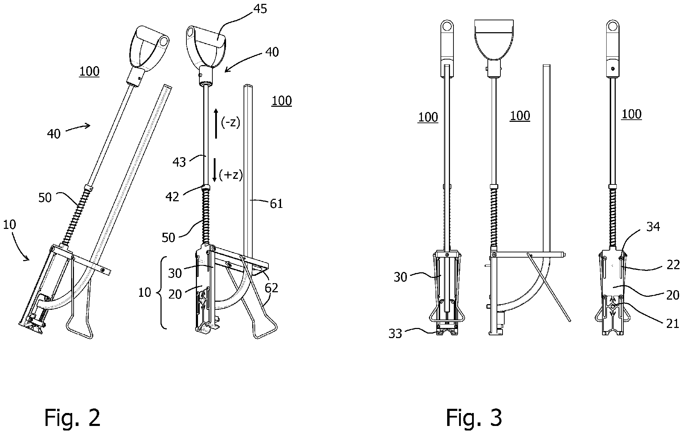

Die Figuren 2-12 zeigen verschiedene Gesamt- und Detailansichten eines Klammergerätes 100, das gemäß dem in Figur 1 allgemein beschriebenen Prinzip konstruiert ist.

Die Figuren 2 und 3 zeigen das Klammergerät 100 in seinem gebrauchsfertigen Ausgangszustand. Erkennbar ist der Setzkopf 10, welcher durch den Schachtdeckel 20 sowie den Schachtkörper 30 gebildet wird, die sich in ihrer Arbeitsposition befinden.

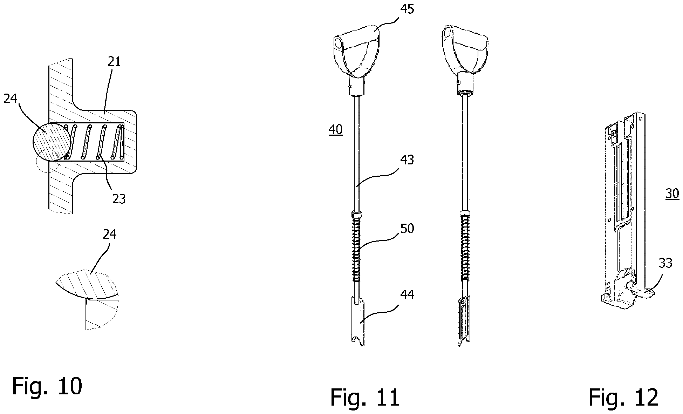

Figur 12 zeigt den Schachtkörper 30 in einer separaten perspektivischen Ansicht. Der Schachtkörper hat einen Fuß 33, mit dem er auf dem Untergrund stehen kann.

Gemäß Figur 2 und 3 führt zum Setzkopf 10 eine Magazinstange 61, auf welcher bei Gebrauch des Gerätes Klammern zugeführt werden (nicht dargestellt). Weiterhin sind Rahmenteile 62 zum Halten der Magazinstange 61 sowie zum Abstellen des Klammergerätes auf dem Boden vorgesehen.

Im Setzkopf 10 befindliche Klammern können durch den Stempel 40 herausgedrückt werden (eine separate perspektivische Ansicht des Stempel 40 zeigt Figur 11). Der Stempel 40 enthält eine Stange 43, an deren oberen Ende ein Betätigungsgriff 45 angebracht ist. Die Stange 43 endet innerhalb des Setzkopfes 10 in einem Stößel 44, welcher mittels einer Senkschraube mit der Stange 43 verbunden ist. Durch seine Breite bildet das obere Ende des Stößels 44 einen "Anschlagskörper" 41 innerhalb des Setzkopfes 10 (genauer: gegenüber dem Schachtkörper 30). Dieser verhindert, dass der Stempel 40 sich vom Setzkopf 10 lösen kann.

Des Weiteren ist eine Spiral-Druckfeder 50 um die Stange 43 des Stempels 40 angeordnet, deren oberes Ende über die Federbefestigung 42 an der Stange 43 des Stempels fixiert ist. Das untere Ende der Feder 50 stützt sich auf dem Schachtdeckel 20 des Setzkopfes ab. Die Feder 50 ist so vorgespannt, dass sie den Stempel 40 aus dem Setzkopf 10 herauszudrücken versucht (was durch den Anschlag des Stößels 44 verhindert wird).

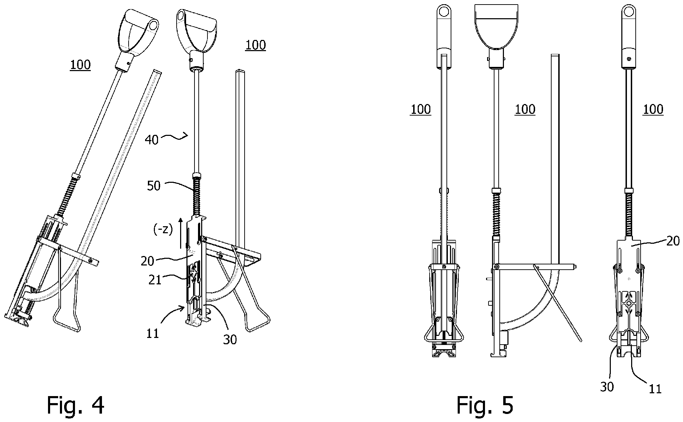

Die Figuren 4 und 5 zeigen in Ansichten analog zu den Figuren 2 und 3 das Klammergerät 100 nach dem Zurückziehen des Schachtdeckels 20 in negative Setzrichtung (-z), wodurch der Zugang zum Klammerschacht 11 freigegeben wird. Das Zurückziehen in negative Setzrichtung erfolgt unter Kompression der Feder 50. Der Schachtdeckel 20 bewegt sich dabei relativ zum Schachtkörper 30, während der Stempel 40 gegenüber dem Schachtkörper 30 in Ruhe bleibt.

Die Bewegung des Schachtdeckels 20 gegenüber dem Schachtkörper 30 wird durch Führungsschlitze 22 im Schachtdeckel kontrolliert und begrenzt, durch welche im Schachtkörper 30 befestigte Führungsschrauben 34 ragen.

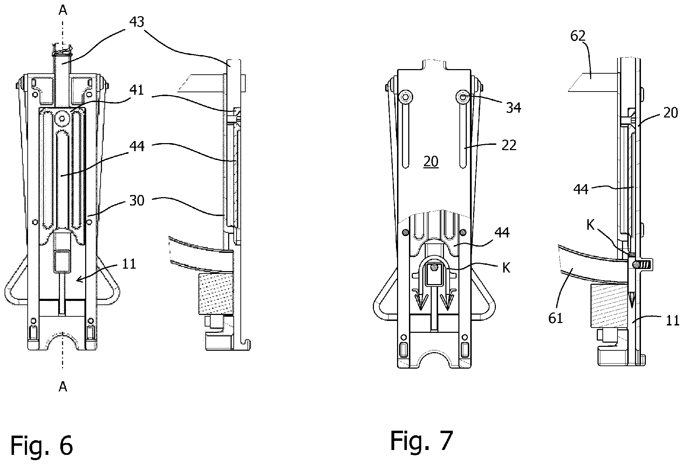

Die Figuren 6-9 zeigen aufeinander folgende Schritte beim Setzen einer Klammer K mit dem Klammergerät 100. Die Figuren enthalten dabei jeweils links eine Frontansicht des Setzkopfes 10 und im rechten Teil Schnitte entlang der Mittelachse A-A durch den Setzkopf.

Figur 6 zeigt den Setzkopf 10 im Ruhezustand ohne Klammer, wobei der Schachtdeckel 20 zeichnerisch nicht dargestellt ist, um den Blick in den Klammerschacht 11 frei zu geben. Erkennbar ist, dass der Stößel 44 mit seinem oberen Ende ("Anschlagskörper 41") am Schachtkörper 30 anliegt.

In Figur 7 ist eine Klammer K unmittelbar nach Übertritt von der Magazinstange 61 in den Klammerschacht 11 dargestellt. Der Stößel 44 des Stempels befindet sich weiterhin in der nach oben zurückgezogenen Position und wirkt noch nicht auf die Klammer K ein. Vom Schachtdeckel 20 ist hier und in den folgenden Figuren in den Aufsichten (links) nur der obere Teil dargestellt, um weiterhin den Blick auf den Klammerschacht 11 zu ermöglichen.

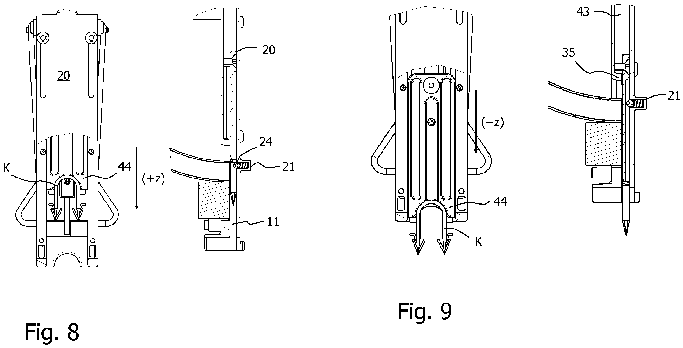

Figur 8 zeigt einen darauf folgenden Zustand, in dem die Klammer K so weit in den Klammerschacht 11 hineingerutscht ist, bis sie von einer Klammerrückhaltung an der weiteren Bewegung gehindert wird. Die Klammerrückhaltung ist in Figur 10 detaillierter dargestellt und umfasst eine gegen eine Feder 23 bewegliche Kugel 24, welche in den Klammerschacht hineinragt, sich bei entsprechendem Druck jedoch daraus zurückziehen kann. Die Kugel und die Feder sind in einem Kopf 21 untergebracht, welcher am Schachtdeckel 20 ausgebildet ist und welcher als Griff beim Zurückziehen des Schachtdeckels dienen kann.

Figur 8 zeigt weiterhin, dass der Stößel 44 durch Druck auf den Stempel 40 in positive Setzrichtung (+z) soweit nach unten bewegt wurde, dass er an der Klammer K anliegt.

Figur 9 zeigt den letzten Schritt des Setzvorganges, bei welchem durch weiteren Druck auf den Stempel 40 die Klammer K an der Klammerrückhaltung vorbeibewegt und schließlich in den Untergrund hineingedrückt wird. Das Ende des Setzvorganges wird erreicht, wenn der Stempel 40 mit der Stange 43 an einem Anschlag 35 des Schachtkörpers 30 anstößt. Durch diese Begrenzung der Bewegung des Stempels 40 in Setzrichtung (+z) wird eine Blocklage der Feder 50 verhindert, was die Lebensdauer der Feder erhöht.

Anschließend kann der Stempel 40 durch die Feder 50 wieder in seine Ruheposition (Figur 2, 3, 6, 7) zurückgezogen werden.

## Patentansprüche

1. Klammergerät (100), enthaltend:
- einen Schachtkörper (30);
- einen Schachtdeckel (20), welcher beweglich gegenüber dem Schachtkörper (30) gelagert ist, wobei er in einer Arbeitsposition mit dem Schachtkörper zusammen einen Klammerschacht (11) ausbildet;
- einen Stempel (40), welcher gegenüber dem Schachtdeckel (20) und dem Schachtkörper verschiebebeweglich in einer Setzrichtung (z) gelagert ist und einen Anschlagkörper (41) aufweist;
- eine Feder (50), welche an einem Ende am Stempel (40) abgestützt ist und eine Druckkraft auf den Schachtdeckel (20) ausübt, welche diesen gegen den Schachtkörper (30) und den Schachtkörper gegen den Anschlagkörper (41) presst.

2. Klammergerät (100) nach einem der übrigen Ansprüche,
**dadurch gekennzeichnet, dass** der Schachtdeckel (20) in Setzrichtung (z) verschiebebeweglich gegenüber dem Schachtkörper (30) ist.

3. Klammergerät (100) nach einem der übrigen Ansprüche,
**dadurch gekennzeichnet, dass** die Feder (50) ihre Druckkraft in Setzrichtung (z) auf den Schachtdeckel (20) ausübt.

4. Klammergerät (100) nach mindestens einem der übrigen Ansprüche,
**dadurch gekennzeichnet, dass** der Schachtdeckel (20) und der Schachtkörper (30) sich in der Arbeitsposition befinden, wenn die Feder (50) den Schachtdeckel (20) gegen den Schachtkörper (30) drückt.

5. Klammergerät (100) nach mindestens einem der übrigen Ansprüche,
**dadurch gekennzeichnet, dass** der Stempel (40) eine Betätigungsstange (43) aufweist, welche von außen in den Klammerschacht (11) hineinführt.

6. Klammergerät (100) nach mindestens einem der übrigen Ansprüche,
**dadurch gekennzeichnet, dass** der Stempel (40) einen im Klammerschacht (11) gelagerten Stößel (44) aufweist.

7. Klammergerät (100) nach mindestens einem der übrigen Ansprüche,
**dadurch gekennzeichnet, dass** der Stempel (40) gegen die Wirkung der Feder (50) aus einer Ruheposition in eine Endposition verschiebebeweglich ist, in der er an den Schachtdeckel (20) und/oder den Schachtkörper (30) anschlägt.

8. Klammergerät (100) nach mindestens einem der übrigen Ansprüche,
**dadurch gekennzeichnet, dass** der Schachtkörper (30) zur Abstützung auf dem Untergrund eingerichtet ist.

9. Klammergerät (100) nach mindestens einem der übrigen Ansprüche,
**dadurch gekennzeichnet, dass** der Schachtkörper (30) ein Magazin (61) für die Zufuhr von Klammern (1) aufweist.

10. Klammergerät (100) nach mindestens einem der übrigen Ansprüche,
**dadurch gekennzeichnet, dass** der Schachtdeckel (20) über Kulissen (22), durch die Führungsstifte (34) ragen, am Schachtkörper (30) gelagert ist.

## Claims

1. Stapling device (100), containing:
- a shaft body (30);
- a shaft cover (20), which is mounted movably with respect to the shaft body (30), wherein it forms in an operating position a clip shaft (11) together with the shaft body;
- a stamp (40), which is mounted slidably in a setting direction (z) with respect to the shaft cover (20) and the shaft body and has a stop body (41);
- a spring (50) which is supported at one end on the stamp (40) and exerts a pressing force on the shaft cover (20), pressing it against the shaft body (30) and the shaft body against the stop body (41).

2. Stapling device (100) according to anyone of the other claims, **characterized in that** the shaft cover (20) is slidable in the setting direction (z) with respect to the shaft body (30).

3. Stapling device (100) according to anyone of the other claims, **characterized in that** the spring (50) exerts its pressing force in setting direction (z) on the shaft cover (20).

4. Stapling device (100) according to at least one of the other claims, **characterized in that** the shaft cover (20) and the shaft body (30) are in the operating position, when the spring (50) presses the shaft cover (20) against the shaft body (30).

5. Stapling device (100) according to at least one of the other claims, **characterized in that** the stamp (40) has an actuation rod (43), which leads from the outside into the clip shaft (11).

6. Stapling device (100) according to at least one of the other claims, **characterized in that** the stamp (40) has a plunger (44) accomodated in the clip shaft (11).

7. Stapling device (100) according to at least one of the other claims, **characterized in that** the stamp (40) is slidable against the effect of the spring (50) from a resting position to an end position, in which it abuts against the shaft cover (20) and/or the shaft body (30).

8. Stapling device (100) according to at least one of the other claims, **characterized in that** the shaft body (30) is arranged for support on the ground.

9. Stapling device (100) according to at least one of the other claims, **characterized in that** the shaft body (30) has a magazine (61) for the supply of clips (1).

10. Stapling device (100) according to at least one of the other claims, **characterized in that** the shaft cover (20) is mounted on the shaft body (30) by coulisses (22), through which guide pins (34) are protruding.

## Revendications

1. Agrafeuse (100), contenant:
- un corps de compartiment (30);
- un couvercle de compartiment (20), qui est monté de manière mobile par rapport au corps de compartiment (30), **caractérisé en ce qu'**il forme dans une position de fonctionnement un compartiment d'agrafes (11) ensemble avec le corps de compartiment;
- un poinçon (40), qui est monté de manière mobile en translation dans une direction de pose (z) par rapport au couvercle de compartiment (20) et au corps de compartiment, et possède un corps d'arrêt (41);
- un ressort (50) qui est supporté à une extrémité sur le poinçon (40) et exerce une force de pression sur le couvercle de compartiment (20), pressant celui-ci contre le corps de compartiment (30) et le corps de compartiment contre le corps d'arrêt (41).

2. Agrafeuse (100) selon l'une des autres revendications, **caractérisée en ce que** le couvercle de compartiment (20) est mobile en translation dans la direction de pose (z) par rapport au corps de compartiment (30).

3. Agrafeuse (100) selon l'une des autres revendications, **caractérisée en ce que** le ressort (50) exerce sa force de pression dans la direction de pose (z) sur le couvercle de compartiment (20).

4. Agrafeuse (100) selon l'une des autres revendications, **caractérisée en ce que** le couvercle de compartiment (20) et le corps de compartiment (30) se trouvent en position de fonctionnement quand le ressort (50) presse le couvercle de compartiment (20) contre le corps de compartiment (30).

5. Agrafeuse (100) selon au moins l'une quelconque des autres revendications,
**caractérisée en ce que** le poinçon (40) a une tige d'actionnement (43) qui mène de l'extérieur dans le compartiment d'agrafes (11).

6. Agrafeuse (100) selon au moins l'une quelconque des autres revendications,
**caractérisée en ce que** le poinçon (40) a un poussoir (44) monté dans le compartiment d'agrafes (11).

7. Agrafeuse (100) selon au moins l'une quelconque des autres revendications,
**caractérisée en ce que** le poinçon (40) est mobile en translation contre l'effet du ressort (50) d'une position de repos à une position finale, dans laquelle il bute contre le couvercle de compartiment (20) et/ou le corps de compartiment (30).

8. Agrafeuse (100) selon au moins l'une quelconque des autres revendications,
**caractérisée en ce que** le corps de compartiment (30) est arrangé pour l'appui sur le sol.

9. Agrafeuse (100) selon au moins l'une quelconque des autres revendications,
**caractérisée en ce que** le corps de compartiment (30) a un magasin (61) pour l'alimentation d'agrafes (1).

10. Agrafeuse (100) selon au moins l'une quelconque des autres revendications,
**caractérisée en ce que** le couvercle de compartiment (20) est monté au corps de compartiment (30) par des coulisses (22), à travers lesquelles saillent des broches de guidage (34).
